# EUROPEAN PATENT SPECIFICATION

(11) **EP 1 988 036 B1**
(45) Date of publication and mention of the grant of the patent: **14.07.2010**
(21) Application number: 08007371.1
(22) Date of filing: 15.04.2008
(51) Int. Cl.: B65G 1/02, B65D 19/38

(54) **Pallet storage system**
Palettenlagerungssystem
Système de stockage de palette

(30) Priority: 30.04.2007 US 914806 P
(43) Date of publication of application: 05.11.2008
(73) Proprietor: Grainger, Allan, Merthyr Tydfil CF47 8YW (GB)
(72) Inventor: Grainger, Allan, Merthyr Tydfil CF47 8YW (GB)
(74) Representative: Jones, Ithel Rhys

(56) References cited:
- EP-A- 1 428 753
- US-A1- 2003 146 361
- US-A1- 2007 278 169

## Description

The present invention relates to a pallet storage system.

Heavy-duty pallets are available for storing a variety of large/heavy items; typical examples are disclosed in US 2003/0146361 and EP-A-1428753. The pallets are often transported using forklift trucks and heavy-duty racks for storing several loaded pallets are available (for example those produced by Rack International (UK) Limited of Merthyr Tydfil, United Kingdom). In some cases it is desirable to have additional support for the pallets rather than placing them directly in a rack because pallets in racks can be susceptible to movement in vertical and horizontal planes during transit. Attaching fixing means such as bolts directly to the pallets can be undesirable and so there is a need for apparatus that can securely support individual loaded pallets.

According to a first aspect of the present invention there is provided a pallet storage system including:
a pallet having a base with upstanding rear and side walls, at least one of the side walls including at least one engaging formation; and
a pallet support frame having a base with upstanding rear and side walls, at least one of the side walls including at least one engaging formation,
the system further including at least one moveable member configured to contact the side walls of the pallet, when the pallet is inserted into the pallet support frame, to guide the at least one engaging formation of the pallet to engage with the corresponding at least one engaging formation of the pallet support frame according to claim 1.

The at least one engaging formation may be located on a rear wall of the pallet and the at least one engaging formation of the frame may be located on the rear wall of the frame. The at least one engaging formation on the rear wall of the pallet may include a protrusion and the at least one engaging formation on the rear wall of the pallet support frame may include an aperture.

The moveable member may include a resilient member that is fixed to an inner surface of the respective side wall of the pallet support frame. The resilient member be formed to include a portion that extends inwards from its respective side wall. The resilient member may be so formed by being bent. In use, at least the bent portion may contact a said outer side wall of the pallet. One end of the resilient member may be fixed to the inner surface of the side wall of the pallet support frame, with another end of the resilient member not being fixed to the side wall of the pallet support frame.

At least one side wall of the pallet may include a further engaging formation and at least one corresponding said side wall of the pallet support frame may include a corresponding further engaging formation. The further engaging formation of the pallet may include a member having a rear surface and an upper surface and the further engaging formation of the pallet support frame may include a member having a rear surface and an upper surface, in use, the respective rear and upper surfaces contacting each other thereby limiting or preventing vertical and horizontal relative movement of the pallet and the pallet support frame. The rear surfaces of the further engaging formations may be angled downward with respect to the upper surfaces.

The pallet may include at least one foot and the base of the pallet support frame may include a space or at least one slot for allowing the at least one foot of the pallet to protrude through the pallet support frame base. The space or at least one slot may be substantially central so that, in use, part of the pallet base may rest upon a side portion of the base of the pallet support frame.

The pallet may include a set of pads for assisting with sliding the pallet onto the support frame. Each of the pads may comprise a portion of vibration-reducing material, such as rubber, that is sandwiched between the base of the pallet and a portion of low-friction material, such as plastic.

The pallet support frame may include a formation configured to allow the frame to be fixed to an outer frame or rack.

According to a further aspect of the present invention there is provided a storage system including at least one pallet storage system substantially as described herein and an outer rack or frame fixed to the at least one pallet storage system.

The outer frame may be fixed to the outer rack or frame by means of bolts or the like.

Whilst the invention has been described above, it extends to any inventive combination of the features set out above or in the following description. Although illustrative embodiments of the invention are described in detail herein with reference to the accompanying drawings, it is to be understood that the invention is not limited to those precise embodiments. As such, many modifications and variations will be apparent to practitioners skilled in this art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings, in which:
Figures 1A to 1E are front, side, plan, rear and bottom views, respectively, of an example pallet used in the system;
Figure 1F details a pad located on the bottom of the pallet;
Figures 2A to 2C are front, side and plan views, respectively, of a pallet support frame of the system;
Figures 3 and 3B are front and side views, respectively, of the pallet fitted in the support frame;
Figures 4A to 4C are front, side and plan views, respectively, of the pallet and pallet support frame attached to an outer frame.

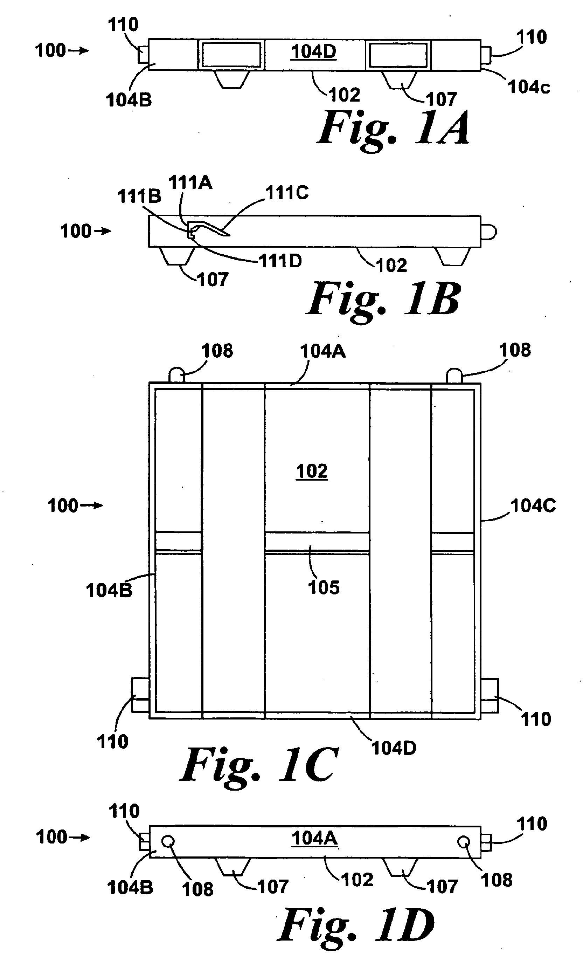

Referring to Figures 1A to 1E, an example of a pallet 100 is shown. (It will be understood that some of the Figures show certain members in a semi-transparent/sectional manner for ease of illustration.) The pallet comprises a base 102 that is a square/rectangular member that can be formed of one or more pieces of rigid material such as metal, wood or the like. Upstanding from the base are rear 104A, side 104B, 104C and front 104D walls that form a short boundary wall around the perimeter of the base. The pallet may include further members such as cross beams 105 to assist with rigidity. The base 102 of the pallet includes a set of four feet 107 upon which it can rest.

The components described so far are substantially conventional and can be found in many kinds of commercially available pallets. It will be understand that a variety of materials and construction methods can be used to produce the pallet and variations are possible from the examples shown in the Figures. For instance, all of the walls need not have the same height (or in some cases there may be fewer than four walls); the walls needs not be continuous around the perimeter of the base, i.e. they could be intermittent; the walls may be constructed of rigid materials such as steel and fixed to the base by a variety of means, e.g. nuts/bolts or nails.

The outer surface of the rear wall 104A includes a pair of projections 108, each of the projections being located a short distance away from the adjacent side edge of the pallet 100. The projections 108 have a dome shape at their ends and can be constructed from a semi-rigid or resilient material such as rubber.

Each side wall 104B, 104C of the pallet 100 includes an engaging formation 110 on its outer surface, near the front wall 104D. As can best be seen in the side view of Figure 1B, each side engaging formation 110 includes a substantially flat member (e.g. made of a rigid material such as steel) that is formed to have a vertical portion 111A with a horizontal portion 111B extending from its upper end, towards the rear of the pallet. An angled portion 111C depends from the other end of portion 111B and extends further towards the rear of the pallet. There is also a short horizontal portion 111 D parallel to horizontal portion 111B that extends from the bottom end of the vertical portion 111A.

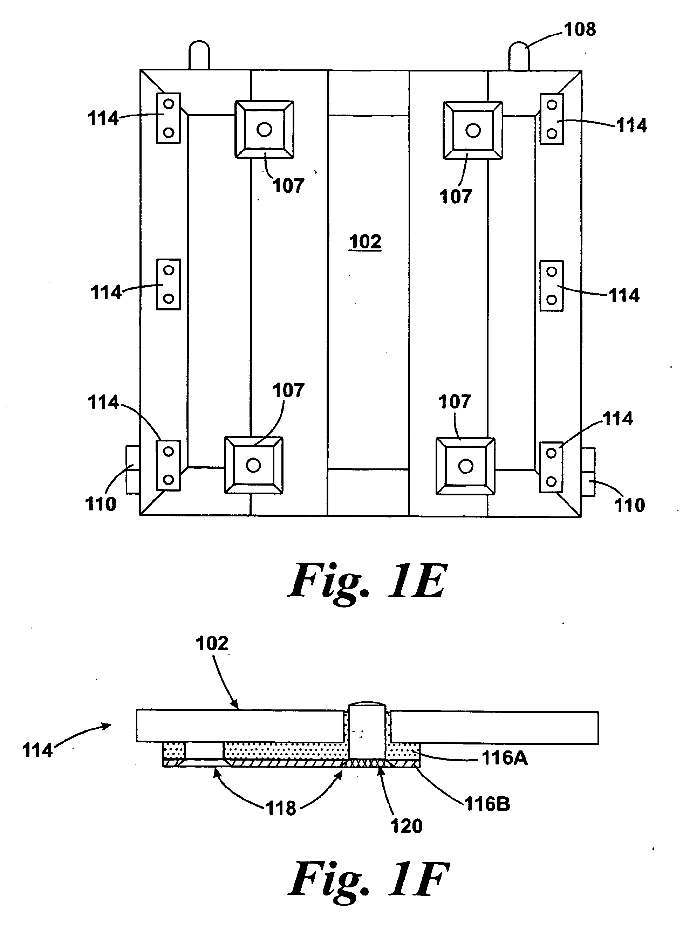

The bottom surface of the pallet base 102 is shown in Figure 1E. The bottom of the pallet is fitted with a set of pads 114. In the example there are six such pads. Three of the pads are arranged at intervals in a line adjacent the left-hand edge of the pallet and the other three arranged in a similar line adjacent the right-hand edge. It will be understood that the number and arrangement of pads in the Figure is exemplary only.

Figure 1F is a schematic side view through one of the pads and part of the pallet base. Each pad comprises a rectangular portion 116A of rubber about 6.35 mm (0.25") thick that is sandwiched between the pallet base and a rectangular portion 116B of plastic (about 3.175 mm (0.125") thick). The portions each include a pair of apertures 118 that allows them to be connected to the pallet base by means of a pair of C/sunk screws (one screw 120 only shown in the Figure). The pads assist with allowing the pallet to slide onto the support frame (described below) and reduce vibration (and reduce/eliminate metal-to-metal contact in cases where pallet base is formed of metal) in use.

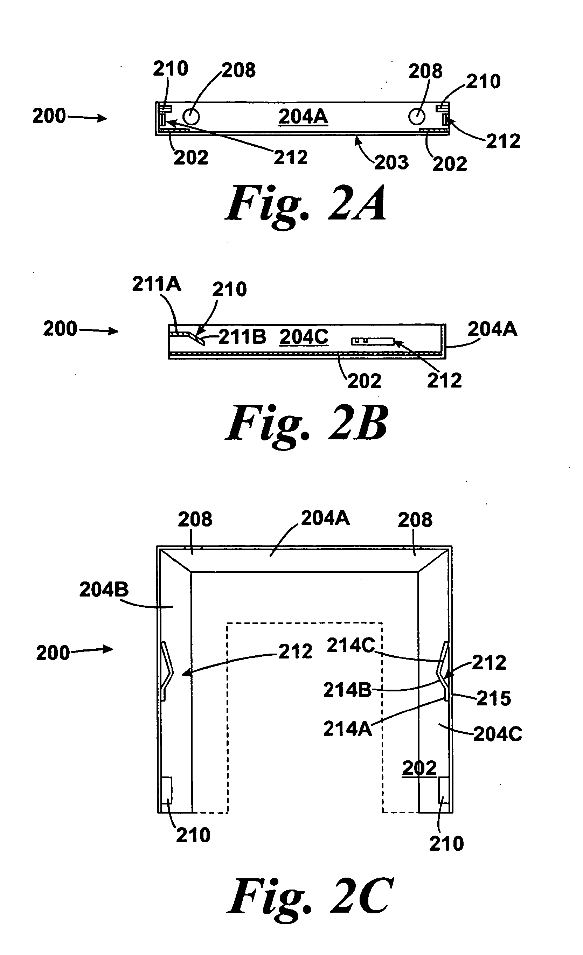

Turning to Figures 2A to 2C, an example of a support frame 200 for use with the pallet 100 is shown. The support frame includes a square/rectangular base 202 upstanding from which are a rear wall 204A and two opposed side walls 204B, 204C. The base 202 can include a space 203 as shown by the broken lines. In use, when the pallet 100 is inserted into the frame 200, the feet 107 of the pallet can protrude through the space 203. However, it will be understood that a different arrangement could be used, e.g. slots or recesses located to accommodate the feet. It will also be understood that the frame 200 can be constructed from a variety of materials and using any suitable construction method. In the example, the walls of the frame are formed of a rigid metal such as steel. The dimensions of the frame 200 will be chosen in general so that they can easily accommodate the pallet 100.

The rear wall 204A of the frame 200 includes a pair of apertures 208. The size and location of the apertures 208 are chosen to correspond with those of the projections 108 of the pallet rear wall 104A. Near the front (loading) end of each side wall 204B, 204C there is an engaging formation 210. The shape and location of the engaging formations 210 are chosen to correspond with those of the formations 110 on the side walls of the pallet 100. As can be seen in Figure 2B, each formation 210 (located on the inner surface of the side wall) includes a horizontal portion 211A (having a length generally corresponding to that of portion 111B of pallet side wall formation 110) and a depending angled portion 211 B (having a length and angle generally corresponding to those of the angled portion 111C of the engaging formation 110 on the pallet).

The inner surface of each side wall of the pallet support frame also includes a moveable member 212, which is located about mid-way along the length of the side wall in the example, although it will be understood that its position can vary. As can best be seen in the plan view of Figure 2C, each moveable member 212 is formed of a bent length of spring steel. A first portion 214A at one end of the length of spring steel can be fixed to the inner surface of its respective side wall by the means of bolts 215, or any other suitable fixing means. A second portion 214B of the moveable member 212 is bent so as to extend inwardly towards the centre of the base 202 of the frame and towards its rear wall 204A. A third and final portion 214C of the moveable member 212 extends further towards the rear wall of the frame and is angled back towards the inner surface of its respective side wall.

In use, the pallet is loaded into the frame 200 by moving its rear end towards the rear wall 204A of the pallet support frame. The low-friction plastic from which the pallet pads 114 are formed help with allowing the pallet to be slid over the surface of the support frame. The outer surfaces of the side walls 104B, 104C of the pallet 100 can come into contact with parts of the moveable member 212 on the side walls of the frame 200 as the pallet is inserted. Each member 212 has sufficient freedom of movement to accommodate the pallet being inserted into the frame in a manner that is not completely aligned with the frame. As the pallet is moved further towards the rear of the frame it slides against the protruding parts of the members 212, causing the third portion 214C of that member to be moved to contact its respective frame side wall 204B, 204C. This contact can keep the member 212 in place temporarily, which can help force the rear of the pallet into alignment with the rear of the frame so that the protrusions 108 on the pallet enter into the apertures 208 on the rear wall 204A of the frame.

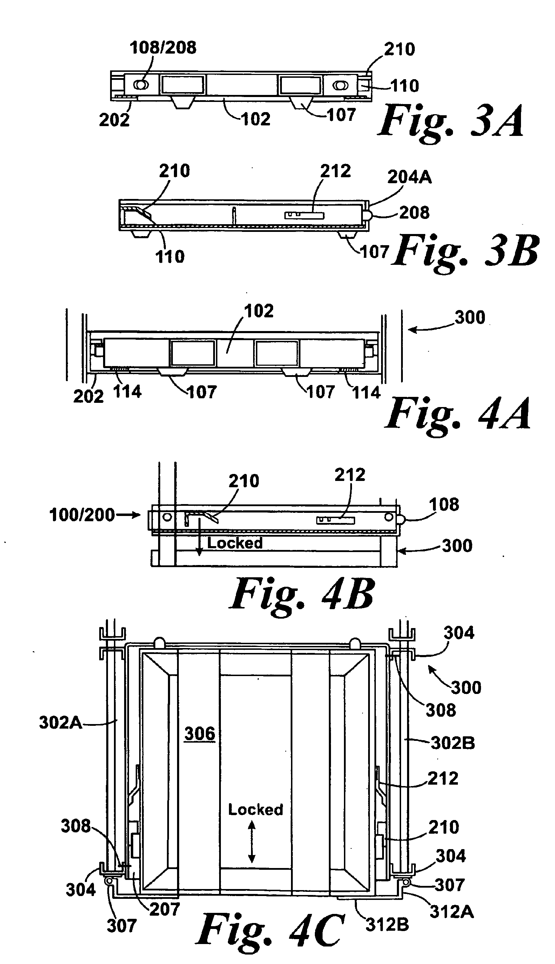

Additionally, the diagonal/rear portion 111C of each side engaging formation 110 on the pallet can come into contact with the diagonal/rear 211B portion of the corresponding engaging formation 210 on the frame, as well as the upper portion 111B of the pallet formation 110 contacting the upper formation 211 A of the frame formation 210. Contact between the rear walls of the pallet and frame and the respective side formations 110, 210 can limit movement of the pallet relative to the frame in a rearward direction. Further, engagement between the protrusions 108 and apertures 208 and side formations 110, 210 can limit relative vertical movement of the pallet and frame. This locking/engagement between the pallet and the frame is shown in Figures 3A and 3B.

It will be understood that the various formations/member used to guide and cause engagement between the pallet 100 and the frame 200 shown in the Figures are exemplary only. For instance, the pallet could include at least one aperture instead of (or in addition to) projections 108, with the frame having a corresponding set of at least one projection. Other types of interlocking formations could also be used and the formations could be located on a side wall instead of/in addition to a rear wall. Further, the guiding members 212 and side formations 110, 210 need not be on both sides of the frame/pallet, although this would not usually be as effective. More than one set of guiding member and side formations could also be present on each side surface of the frame/pallet. Also, the side engaging formations 110, 210 can take different forms, e.g. a releasable latch. It will also be appreciated that the moveable guiding members 212 can take different forms. For instance, instead of being formed of a resilient material such as spring steel, the members could be rigid and pivotably fixed to the side walls, with a biasing device or a pad of resilient material being used to move back towards the centre of the frame when there is nothing forcing them towards the side walls. The guiding members could also be located elsewhere on the frame, or could be positioned on the pallet instead. Further, an additional engaging formation (not shown) may be fitted on the pallet and/or frame in order to limit/prevent movement of the pallet towards the front of the frame.

Figures 4A to 4C show the pallet 100 fitted within the frame 200, with that frame being fixed to an outer frame 300. The outer frame 300 can be similar to the storage frame described in the present inventor's US Patent Application published as US-A-2007/0278918 (i.e. have an extendable "drawer-type" member for supporting the pallet 100/frame 200), the removeable frame (designed to be releaseably fixed within an outer container) described in the present inventor's US Patent Application published as US-A-2007/0278169, or it may be a simpler box-like frame or rack. Briefly, the outer frame 300 can be a framework that includes a set of spaced apart upper and lower beams that are connected together by uprights 304. Longitudinal members 302A, 302B can also be used to connect corresponding pairs of the upright 304.

In the example, the pallet support frame 200 is connected to a set of four (corner) uprights 304 of the outer frame 300 by means of bolts 308 that fit into apertures 207 in the pallet support frame. However, it will be understood that other ways of (releasably) fixing the pallet support frame to the outer frame can be used, e.g. interlocking formations. The outer frame 300 may include formations that facilitate stacking it with other boxes/outer frames. Each of the pair of uprights at the front end of the outer frame includes a gate 310. Viewed from above, each gate 310 is generally L-shaped, with its (shorter) base 312A being connected by means of a pivot 307 to its respective upright 304. The pivot allows the gate 310 to move between a "closed" position (as shown in Figure 4C) where the stem 312B is substantially parallel to the rear wall of the frame 200 and outer frame 300 and so extends in front of the front ends of the frame and pallet. The portion of the stem 312B that extends in front of the frame/pallet may have a length that is anywhere between around 10% - 50% of the width of the front of the frame/pallet. The gate 310 can also pivot to an "open" position that allows the frame 200 and pallet 100 to be pulled out of the front of the outer frame 300 when desired. Shot bolts or other locking devices may be used to hold the gates in their closed and/or open positions.

## Claims

1. A pallet storage system including:
a pallet (100) having a base (102) with upstanding rear (104A) and side walls (1048, 104C), at least one of the side walls **characterised in that** it further includes at least one engaging formation (108); and
a pallet support frame (200) having a (202) base with upstanding rear (204A) and side walls (204B, 204C), at least one of the side walls including at least one engaging formation (208),
the system further including at least one moveable member (212) configured to contact the side walls of the pallet, when the pallet is inserted into the pallet support frame, to guide the at least one engaging formation of the pallet to engage with the corresponding at least one engaging formation of the pallet support frame.

2. A storage system according to claim 1, wherein the at least one engaging formation (108) is located on a rear wall (104A) of the pallet (100) and the at least one engaging formation (208) of the frame (200) is located on the rear wall (204A) of the frame.

3. A storage system according to claim 1 or 2, wherein the at least one engaging formation on the rear wall (104A) of the pallet (100) includes a protrusion (108) and the at least one engaging formation on the rear wall (204A) of the pallet support frame (200) includes an aperture (208).

4. A storage system according to any one of the preceding claims, wherein the moveable member includes a resilient member (212) that is fixed to an inner surface of the respective side wall (204) of the pallet support frame (200).

5. A storage system according to claim 4, wherein the resilient member (212) is formed so as to include a portion (214B) that extends inwards from its respective side wall (204).

6. A storage system according to claim 5, wherein the resilient member (212) is so formed by being bent.

7. A storage system according to claim 6, where, in use, at least the bent portion (214B) of the resilient member (212) contacts an outer surface of a said side wall (104) of the pallet.

8. A storage system according to any one of claims 4 to 7, wherein one end (214A) of the resilient member (212) is fixed to an inner surface of the side wall (204) of the pallet support frame (200), with another end (214C) of the resilient member not being fixed to the side wall of the pallet support frame.

9. A storage system according to any one of the preceding claims, wherein at least one side wall (104) of the pallet (100) includes a further engaging formation (110) and at least one corresponding said side wall (204) of the pallet support frame (200) includes a corresponding further engaging formation (210).

10. A storage system according to claim 9, wherein the further engaging formation (110) of the pallet (100) includes a member having a rear surface (111C) and an upper surface (111 B) and the further engaging formation (210) of the pallet support frame (200) includes a member having a rear surface (211B) and an upper surface (211A), in use, the respective rear and upper surfaces of the further engaging formations (110, 210) contacting each other, thereby limiting or preventing vertical and horizontal relative movement of the pallet and the pallet support frame.

11. A storage system according to any one of the preceding claims, wherein the pallet (100) includes at least one foot (107) and the base (202) of the pallet support frame (200) includes a space (203) or at least one slot for allowing the at least one foot of the pallet to protrude through the pallet support frame base.

12. A storage system according to any one of the preceding claims, wherein the pallet (100) includes a set of pads (114) for assisting with sliding the pallet onto the support frame (200).

13. A storage system according to claim 14, wherein each of the pads (104) comprises a portion of vibration-reducing material (116A), such as rubber, that is sandwiched between the base (102) of the pallet (100) and a portion of low-friction material (116B), such as plastic.

14. A storage system according to any one of the preceding claims, wherein the pallet support frame (200) includes at least one formation (207) configured to allow the frame to be fixed to an outer frame or rack (300).

15. A storage system including at least one pallet storage system (100, 200) according to any one of the preceding claims and an outer rack or frame (300) releaseably fixed to the at least one pallet storage system.

## Patentansprüche

1. Paletten-Lagersystem, umfassend eine Palette (100) mit einem Boden (102), der stehende Rück- (104A) und Seiten-Wände (104B, 104C) aufweist, wobei wenigstens eine der Seitenwände **dadurch gekennzeichnet ist, daß** sie des weiteren mit wenigstens einer Eingriffsausbildung (108) versehen ist; und ferner umfassend einen Paletten-Tragrahmen (200), der einen Bodenkörper (202) mit stehenden Rückwänden (204A) und Seitenwänden (204B, 204C) aufweist, wobei wenigstens eine der Seitenwände mit wenigstens einer Eingriffsausbildung (208) versehen ist, und wobei das System des weiteren wenigstens einen beweglichen Körper (212) besitzt, der so ausgestaltet ist, daß er die Seitenwände der Palette berührt, sobald die Palette in den Paletten-Tragrahmen eingesetzt wird, um die wenigstens eine Eingriffsausbildung der Palette so zu führen, daß sie mit der entsprechenden wenigstens einen Eingriffsausbildung des Paletten-Tragrahmens in Eingriff kommt.

2. Paletten-Lagersystem nach Anspruch 1, **dadurch gekennzeichnet, daß** die wenigstens eine Eingriffsausbildung (108) auf einer Rückwand (104A) der Palette (100) angeordnet ist, und daß die wenigstens eine Eingriffsausbildung (208) des Rahmens (200) auf der Rückwand (204A) des Rahmens angeordnet ist.

3. Paletten-Lagersystem nach Anspruch 1 oder 2, **dadurch gekennzeichnet, daß** die wenigstens eine Eingriffsausbildung auf der Rückwand (104A) der Palette (100) einen Vorsprung (108) bildet, und daß die wenigstens eine Eingriffsausbildung der Rückwand (204A) des Paletten-Tragrahmens (200) eine Öffnung (208) aufweist.

4. Paletten-Lagersystem nach einem der vorhergehenden Ansprüche, **dadurch gekennzeichnet, daß** der bewegliche Körper einen federnden Körper (212) aufweist, der auf einer inneren Oberfläche der entsprechenden Seitenwand (204) des Paletten-Tragrahmens (200) befestigt ist.

5. Paletten-Lagersystem nach Anspruch 4, **dadurch gekennzeichnet, daß** der federnde Körper (212) so ausgebildet ist, daß er einen Teil (214B) aufweist, welcher sich an der entsprechenden Seitenwand (204) nach innen erstreckt.

6. Paletten-Lagersystem nach Anspruch 5, **dadurch gekennzeichnet, daß** der federnde Körper (212) durch Biegen so geformt wird.

7. Paletten-Lagersystem nach Anspruch 6, **dadurch gekennzeichnet, daß** bei Benutzung wenigstens der gebogene Teil (214B) des federnden Körpers (212) eine äußere Oberfläche der Seitenwand (104) der Palette berührt.

8. Paletten-Lagersystem nach einem der Ansprüche 4 bis 7, **dadurch gekennzeichnet, daß** das eine Ende (214A) des federnden Körpers (212) an einer inneren Oberfläche der Seitenwand (204) des Paletten-Tragrahmens (200) befestigt ist, während das andere Ende (214C) des federnden Körpers nicht an der Seitenwand des Paletten-Tragrahmens befestigt wird.

9. Paletten-Lagersystem nach einem der vorhergehenden Ansprüche, **dadurch gekennzeichnet, daß** wenigstens die eine Seitenwand (104) der Palette (100) eine weitere Eingriffs-Ausbildung (110) aufweist und daß wenigstens eine entsprechende Seitenwand (204) des Paletten-Tragrahmens (200) eine entsprechende weitere Eingriffs-Ausbildung (210) aufweist.

10. Paletten-Lagersystem nach Anspruch 9, **dadurch gekennzeichnet, daß** die weitere Eingriffs-Ausbildung (110) der Palette (100) mit einem Körper versehen ist, der eine hintere Oberfläche (111C) und eine obere Oberfläche (111 B) besitzt, und daß die weitere Eingriffs-Ausbildung (210) des Paletten-Tragrahmens (200) einen Körper aufweist, der eine hintere Oberfläche (211B) und eine obere Oberfläche (211A) aufweist, wobei in Benutzung die entsprechenden hinteren und oberen Oberflächen der weiteren Eingriffs-Ausbildungen (110, 210) einander berühren, um dadurch die vertikale und horizontale Relativbewegung der Palette und des Paletten-Tragrahmens zu begrenzen oder zu verhindern.

11. Paletten-Lagersystem nach einem der vorhergehenden Ansprüche, **dadurch gekennzeichnet, daß** die Palette (100) wenigstens einen Fuß (107) aufweist, und daß der Boden (202) des Paletten-Tragrahmens (200) mit einem Raum (203) oder wenigstens einem Schlitz versehen ist, die wenigstens einem Fuß der Palette ermöglichen, durch den Paletten-Tragrahmen-Boden hindurchzuragen.

12. Paletten-Lagersystem nach einem der vorhergehenden Ansprüche, **dadurch gekennzeichnet, daß** die Palette (100) mit einer Reihe Puffer (114) versehen ist, die das Gleiten der Palette auf dem Tragrahmen (200) unterstützen.

13. Paletten-Lagersystem nach Anspruch 14, **dadurch gekennzeichnet, daß** jeder Puffer (104) einen Teil aus schwingungsreduzierendem Material (116A), beispielsweise Gummi aufweist, der zwischen dem Boden (102) und der Palette (100) sandwichartig angeordnet ist, sowie einen Teil aus reibungsarmem Material (116B), beispielsweise Kunststoff.

14. Paletten-Lagersystem nach einem der vorhergehenden Ansprüche, **dadurch gekennzeichnet, daß** der Paletten-Tragrahmen (200) wenigstens eine Ausbildung (207) aufweist, die so gestaltet ist, daß sie die Befestigung des Rahmens an einem äußeren Rahmen oder Gestell (300) ermöglicht.

15. Paletten-Lagersystem mit wenigstens einem Paletten-Lagersystem (100, 200) gemäß einem der vorhergehenden Ansprüche und einem äußeren Gestell oder Rahmen (300), das oder der an dem wenigstens einen Paletten-Lagersystem lösbar befestigt ist.

## Revendications

1. Système de stockage de palette comprenant :
- une palette (100) ayant une base (102) avec des parois arrière (104A) et latérales (104B, 104C) verticales, au moins l'une des parois latérales étant **caractérisée par le fait qu'**elle comprend en outre au moins une formation d'engagement (108) ; et
- un cadre de support de palette (200) ayant une base (202) avec des parois arrière (204A) et latérales (204B, 204C) verticales, au moins l'une des parois latérales comprenant au moins une formation d'engagement (208),
- le système comprenant en outre au moins un élément déplaçable (212) configuré pour venir en contact avec les parois latérales de la palette, lorsque la palette est introduite dans le cadre de support de palette, afin de guider la au moins une formation d'engagement de la palette pour qu'elle engage la au moins une formation d'engagement correspondante du cadre de support de palette.

2. Système de stockage selon la revendication 1, dans lequel la au moins une formation d'engagement (108) est située sur une paroi arrière (104A) de la palette (100) et la au moins une formation d'engagement (208) du cadre (200) est située sur la paroi arrière (204A) du cadre.

3. Système de stockage selon la revendication 1 ou la revendication 2, dans lequel la au moins une formation d'engagement sur la paroi arrière (104A) de la palette (100) comprend une saillie (108) et la au moins une formation d'engagement sur la paroi arrière (204A) du cadre de support de palette (200) comprend une ouverture (208).

4. Système de stockage selon l'une quelconque des revendications précédentes, dans lequel l'élément déplaçable comprend un élément élastique (212) qui est fixé à une surface interne de la paroi latérale respective (204) du cadre de support de palette (200).

5. Système de stockage selon la revendication 4, dans lequel l'élément élastique (212) est formé de façon à comporter une partie (214B) qui s'étend vers l'intérieur à partir de sa paroi latérale respective (204).

6. Système de stockage selon la revendication 5, dans lequel l'élément élastique (212) est formé ainsi par pliage.

7. Système de stockage selon la revendication 6, dans lequel, lors de l'utilisation, au moins la partie pliée (214B) de l'élément élastique (212) vient en contact avec une surface externe de ladite paroi latérale (104) de la palette.

8. Système de stockage selon l'une quelconque des revendications 4 à 7, dans lequel une extrémité (214A) de l'élément élastique (212) est fixée à une surface interne de la paroi latérale (204) du cadre de support de palette (200), une autre extrémité (214C) de l'élément élastique n'étant pas fixée à la paroi latérale du cadre de support de palette.

9. Système de stockage selon l'une quelconque des revendications précédentes, dans lequel au moins une paroi latérale (104) de la palette (100) comprend une formation d'engagement supplémentaire (110) et au moins une paroi latérale correspondante précitée (204) du cadre de support de palette (200) comprend une formation d'engagement supplémentaire correspondante (210).

10. Système de stockage selon la revendication 9, dans lequel la formation d'engagement supplémentaire (110) de la palette (100) comprend un élément ayant une surface arrière (111C) et une surface supérieure (111B) et la formation d'engagement supplémentaire (210) du cadre de support de palette (200) comprend un élément ayant une surface arrière (211B) et une surface supérieure (211A), lors de l'utilisation, les surfaces arrière et supérieure respectives des formations d'engagement supplémentaires (110, 210) viennent en contact les unes avec les autres, limitant ou empêchant ainsi un mouvement relatif vertical et horizontal de la palette et du cadre de support de palette.

11. Système de stockage selon l'une quelconque des revendications précédentes, dans lequel la palette (100) comprend au moins un pied (107) et la base (202) du cadre de support de palette (200) comprend un espace (203) ou au moins une fente pour permettre au au moins un pied de la palette de faire saillie à travers la base du cadre de support de palette.

12. Système de stockage selon l'une quelconque des revendications précédentes, dans lequel la palette (100) comprend un ensemble de patins (114) pour aider au coulissement de la palette sur le cadre de support (200).

13. Système de stockage selon la revendication 14, dans lequel chacun des patins (104) comprend une partie de matériau de réduction de vibration (116A), tel que du caoutchouc, qui est pris en sandwich entre la base (102) de la palette (100) et une partie de matériau à faible coefficient de frottement (116B), tel qu'une matière plastique.

14. Système de stockage selon l'une quelconque des revendications précédentes, dans lequel le cadre de support de palette (200) comprend au moins une formation (207) configurée pour permettre au cadre d'être fixé à un cadre ou bâti externe (300).

15. Système de stockage comprenant au moins un système de stockage de palette (100, 200) tel que défini à l'une quelconque des revendications précédentes, et un bâti ou cadre externe (300) fixé de manière libérable au au moins un système de stockage de palette.
